# EUROPÄISCHE PATENTSCHRIFT

(11) **EP 3 575 031 B1**
(45) Veröffentlichungstag und Bekanntmachung des Hinweises auf die Patenterteilung: **19.10.2022**
(21) Anmeldenummer: 19176937.1
(22) Anmeldetag: 28.05.2019
(51) Int. Cl.: B23Q 7/03, B23Q 37/00

(54) **BEARBEITUNGSVORRICHTUNG SOWIE VERFAHREN ZUR MONTAGE DER BEARBEITUNGSVORRICHTUNG**
PROCESSING DEVICE AND METHOD FOR MOUNTING SAME
DISPOSITIF D'USINAGE AINSI QUE PROCÉDÉ DE MONTAGE DU DISPOSITIF D'USINAGE

(30) Priorität: 01.06.2018 DE 102018208678
(43) Veröffentlichungstag der Anmeldung: 04.12.2019
(73) Patentinhaber: HOMAG GmbH, 72296 Schopfloch (DE)
(72) Erfinder: Steeb, Marcel, 72270 Baiersbronn-Mitteltal (DE); Dettling, Peter, 72160 Horb (DE); Thumm, Michael, 72149 Neustetten (DE); Beck, Jochen, 72160 Horb (DE)
(74) Vertreter: Hoffmann Eitle

(56) Entgegenhaltungen:
- EP-A2- 1 033 201
- DE-A1- 10 064 523
- DE-U1-202013 003 528

## Beschreibung

Die vorliegende Erfindung betrifft eine Bearbeitungsvorrichtung, die beispielsweise zur Bearbeitung von plattenförmigen Werkstücken eingesetzt wird, sowie ein Verfahren zur Montage einer Bearbeitungsvorrichtung.

Insbesondere handelt es sich bei der genannten Bearbeitungsvorrichtung um eine Durchlaufmaschine, die eine oder mehrere Fördereinrichtungen zum Bewegen eines Werkstücks aufweist. Beispielsweise wird eine solche Bearbeitungsmaschine im Bereich der Möbel- und Bauelementeindustrie eingesetzt, um Werkstücke aus Holz, Holzwerkstoffen, Verbundwerkstoffen oder ähnlichem zu bearbeiten.

### Stand der Technik

Mit einer Durchlaufmaschine werden sich in einer Durchlaufrichtung bewegende Werkstücke bearbeitet. Beispielsweise können im Rahmen einer solchen Bearbeitung Kanten gefräst, Beschichtungsmaterial an Schmalseiten aufgebracht/angeleimt, und eine Nachbearbeitung durchgeführt werden. Ferner können bspw. Nuten in ein solches Werkstück eingebracht werden.

Üblicherweise weist eine solche Durchlaufmaschine einen Einlaufbereich, einen Aggregatbereich und einen Auslaufbereich auf. Bei bekannten Maschinen werden der Maschinenständer und der zum Niederhalten des Werkstücks verwendete Oberdruck jeweils aus einem Stück gefertigt.

In vielen Fällen hat eine Durchlaufmaschine derartige Dimensionen, dass diese für den nachfolgenden Transport in Teilabschnitte unterteilt werden muss. Diese Abschnitte werden am Montageort zu einer Gesamtmaschine zusammengefügt.

Gemäß DE 199 20 950 A1 ist eine Kantenbearbeitungsmaschine bekannt. Die Kantenbearbeitung findet im Durchlauf zwischen einer Einlaufstation und einer Auslaufstation mit dazwischen sich erstreckenden, auf Laufbahnen geführten Transportketten statt, die entlang verschiedener Bearbeitungsstationen verlaufen.

Die Bearbeitungsstationen bestehen dabei aus einem Segment und aus zumindest einem Modul, wobei das Segment Laufbahnabschnitte für die Transportketten und einen Grundträger aufweist, und das Modul die Bearbeitungsaggregate, erforderlichenfalls die Schallschutzhaube, die Energieversorgungs- und Steuerungskomponenten einschließlich Schaltschrank und Pneumatikanschluss umfasst.

Ferner ist die EP 1 033 201 A2 bekannt, die eine Kantenbearbeitungsmaschine für leisten- und plattenförmige Werkstücke zeigt. Der Maschinenständer dieser Maschine ist aus zumindest zwei, in Förderrichtung der Kettenbahnen hintereinander angeordneten Modulen zusammengesetzt, wobei jedes Modul einen Innenraum zur Aufnahme der Bearbeitungseinrichtungen umschließt und spiegelbildlich ausgeführte Stirnseiten mit Flanschflächen und -bohrungen sowie einer Zentriernut zur Aufnahme einer Zentrierleiste für die Befestigung bzw. Ausrichtung mit einem benachbarten Modul, eine integrierte, der Kettenbahn zugeordnete Linearaufnahme für eine Kettenführungsleiste sowie Anschlüsse für eine Antriebskette und eine Spannketten-Radlagerung aufweist.

Ferner ist die DE 44 16 922 A1 zu nennen, die eine Maschine zur spanenden Bearbeitung zeigt, wobei die Maschine einen Rahmenständer in Form einer Hüllkörperkonstruktion aufweist, die als selbsttragendes Fachwerk sowie als tragendes Maschinengerüst ausgebildet ist, und eine Bearbeitungszelle, bzw. einen Arbeitsraum komplett umschließt, sowie ferner Maschinenbetten oder -ständer, Führungs- und Transportsysteme, Bearbeitungsstationen und dergleichen aufnimmt und hierfür Befestigungsflächen und Strichbohrungen aufweist.

Allerdings haben die im Stand der Technik beschriebenen Bearbeitungsmaschinen den Nachteil, dass alle Segmente mit einer hohen Genauigkeit zueinander gefertigt und die Abschnitte sehr präzise zueinander ausgerichtet werden müssen. Somit müssen Fertigungstoleranzen relativ gering gehalten und die Montage vor Ort präzise durchgeführt werden. Dies wiederum erhöht die Kosten für eine solche Bearbeitungsmaschine.

Ergänzend wird auf die DE 20 2013 003528 U1, in der ein Modulsystem zur Halterung von Bearbeitungsmodulen einer Bearbeitungsanlage beschreiben wird. Diese bekannte Bearbeitungsanlage bildet die Basis für den Oberbegriff des Anspruchs 1. Ferner ist die DE 100 64 523 A1 bekannt.

### Gegenstand der Erfindung

Ein Ziel der vorliegenden Erfindung ist es, den Aufbau einer Bearbeitungsvorrichtung effizient auszugestalten und dabei die Flexibilität zu erhöhen.

Der Gegenstand des Anspruchs 1 stellt eine solche Bearbeitungsvorrichtung bereit. Weitere bevorzugte Ausführungsformen sind in den abhängigen Ansprüchen aufgeführt. Ferner betrifft die Erfindung ein Verfahren.

Die Erfindung bringt den Vorteil mit sich, dass durch die Kombination von vordefinierten Modulen eine kundenspezifische Bearbeitungsmaschine erstellt werden kann. Somit kann eine kommissionsunabhängige Fertigung sichergestellt und dabei die Herstellungskosten durch die Module gesenkt werden. Insgesamt ergibt sich eine Effizienzsteigerung bei der Abwicklung von Aufträgen zum Erstellen kundenspezifischer Bearbeitungsvorrichtungen. Die bereitgestellten Schnittstellen ermöglichen es, Bearbeitungsaggregate baureihenübergreifend einsetzen zu können. Ferner wird eine schnelle Austauschbarkeit von Komponenten im Wartungsfall gewährleistet.

Erfindungsgemäß wird eine Bearbeitungsvorrichtung zum Bearbeiten eines Werkstücks bereitgestellt, die aufweist: eine Fördereinrichtung zum Bewegen eines Werkstücks, welche Fördereinrichtung eine durchgängige Führungsschiene aufweist. Die Fördereinrichtung ist als Kettenförderer ausgebildet sein. Ferner umfasst die Bearbeitungsvorrichtung ein erstes Modul und ein zweites Modul, die mittels der Führungsschiene miteinander verbunden sind, um einen Grundkörper auszubilden. Somit stellt die Führungsschiene ein zentrales Element im modularen Konzept dar. Die Führungsschiene kann eine kostengünstige und konzeptionell vergleichsweise einfache Schnittstelle bereitstellen. Erweiterungsmodule können durch einen Kunden frei definiert werden, so dass kundenspezifische Konstruktionen ermöglicht werden. Ferner ist es möglich, die einzelnen Module jeweils vorzufertigen.

Anspruchsgemäß wird eine durchgängige Führungsschiene bereitgestellt, wobei bevorzugt ist, dass sich die durchgängige Führungsschiene im montierten Zustand der Bearbeitungsvorrichtung in einer horizontalen Richtung erstreckt. Dies bedeutet, dass die Führungsschiene die Schnittstelle zwischen den genannten Modulen überbrückt. Insbesondere soll die Führungsschiene derart angeordnet sein, dass sich die Führungsschiene entlang der Module der Bearbeitungsvorrichtung erstreckt, ohne dass die Führungsschiene selbst im Verbindungsbereich zwischen den Modulen eine Schnittstelle aufweist.

Ferner ist es vorgesehen, dass die Module einen Oberdruck aufnehmen, der sich zumindest abschnittweise benachbart zur Fördereinrichtung erstreckt. Der Oberdruck kann als weiteres verbindendes Element vorgesehen sein, wobei die Führungsschiene eine relative Ausrichtung der Module ermöglicht.

Gemäß einer bevorzugten Ausführungsform ist es vorgesehen, dass sich die Führungsschiene entlang des ersten und zweiten Moduls erstreckt und weiter bevorzugt an einer oder beiden äußeren Endabschnitten der Module übersteht.

Die Anzahl der Module ist nicht beschränkt, sodass die Bearbeitungsmaschine zwei Module, drei Module, vier Module oder weitere Module aufweisen kann. Die Module können ähnlich oder verschieden ausgebildet sein. Gemäß einer Ausführungsform ist es bevorzugt, dass die Bearbeitungsmaschine zwei oder mehr ähnliche Module aufweist.

Weist die Bearbeitungsvorrichtung drei oder mehr Module auf, so kann die Führungsschiene auch zweiteilig ausgebildet sein. Allerdings ist in diesem Fall vorgesehen, dass sich ein Teil der Führungsschiene entlang zumindest zweier Module der Bearbeitungsmaschine erstreckt und die Verbindung zwischen den Teilen der Führungsschiene beabstandet zum Verbindungsbereich zwischen den Modulen vorgesehen ist.

Zum Verbinden der Module mit der Führungsschiene ist beispielsweise ein Verbindungsmechanismus vorgesehen, der im Maschinenständer jedes Moduls selbst bereits enthalten sein kann (z.B. Passfederverbindung, Klemmverbindung, Schraubverbindung, Passfeder, usw.).

Durch die durchgängige Führungsschiene können die minimalen Unstetigkeiten der miteinander verbundenen Module ausgeglichen werden, so dass ein hochpräziser und durchgängiger Werkstücktransport gewährleistet werden kann.

Die Module können gemäß einer Ausführungsform ferner kraftschlüssig miteinander verbunden sein, insbesondere mittels zumindest einer Klemmverbindung. Somit wird zusätzlich zur zentralen Verknüpfung mittels der Führungsschiene eine Verbindung zwischen den Modulen bereitgestellt.

Gemäß einer Ausführungsform weist zumindest eines der Module ein vormontiertes Bearbeitungsaggregat, z.B. ein Fräsaggregat, auf. Das vormontierte Bearbeitungsaggregat kann gemäß einem Kundenwunsch im entsprechenden Modul vorbereitet werden. Somit wird die Effizienz bei der Montage gesteigert.

Gemäß einer Ausführungsform ist es vorgesehen, dass die Führungsschiene eine Kettenführungsschiene ist.

In einer Ausführungsform ist es vorgesehen, dass die Führungsschiene mit einer Rasterung ausgebildet ist oder rasterartige Elemente umfasst. Somit kann die Führungsschiene in einer beliebigen Länge bereitgestellt und für die konkrete Bearbeitungsvorrichtung vorbereitet werden. Die Module werden entsprechend der Rasterung oder der rasterartigen Elemente mit der Führungsschiene verbunden. Somit müssen Schnittstellen der Grundmaschine und Erweiterungsmodule nicht kundenspezifisch ausgeprägt sein, sondern diese Schnittstellen werden global bereitgestellt. Anbauteile, die beim Einfügen eines Sondermoduls versetzt werden sollen oder müssen, können flexibel versetzt werden.

Es ist bevorzugt, dass die Module in Erstreckungsrichtung der Führungsschiene im Wesentlichen gleich dimensioniert sind. Somit kann die Gesamtdimensionierung der Bearbeitungsvorrichtung vereinfacht werden.

Ferner kann es vorgesehen sein, dass die Module Montageplätze für Bearbeitungsaggregate aufweisen, wobei die Anzahl, und bevorzugt die Position, der Montageplätze für Bearbeitungsaggregate gleich ist.

Alternativ oder zusätzlich ist es vorgesehen, dass die Montageplätze derart angeordnet sind, dass die Montageplätze zur Führungsschiene gleich beabstandet sind. Mit anderen Worten weisen die Montagplätze die gleiche Referenz zur Führungsschiene auf.

Ferner kann es vorgesehen sein, dass die Bearbeitungsvorrichtung drei oder mehr Module aufweist. Die durchgängige Führungsschiene verbindet dabei die Module zu einer Bearbeitungsvorrichtung.

Ferner wird ein Verfahren zum Montieren einer Bearbeitungsvorrichtung bereitgestellt, wobei die Bearbeitungsvorrichtung zum Bearbeiten eines Werkstücks eingerichtet ist. Das Verfahren umfasst die Schritte: Bereitstellen einer Fördereinrichtung, welche Fördereinrichtung eine Führungsschiene aufweist, und Verbinden eines ersten Moduls und eines zweiten Moduls mittels der Führungsschiene, um einen Grundkörper der Bearbeitungsvorrichtung auszubilden.

Es ist vorgesehen, dass ein Oberdruck am Grundkörper montiert wird.

Gemäß einer bevorzugten Ausführungsform erstreckt sich der Oberdruck dabei zumindest abschnittsweise parallel zur Fördereinrichtung. Somit ist der Grundkörper durch die Verbindung zwischen Führungsschiene und den Modulen ausgebildet, und an diesem Grundkörper wird der Oberdruck montiert.

Es ist bevorzugt, dass vor dem Verbinden des ersten und zweiten Moduls elektrische und/oder pneumatische Leitungen oder Anschlüsse im jeweiligen Modul vorinstalliert werden. Somit werden die Module für die spätere Montage vorbereitet.

Es kann vorgesehen sein, dass nach dem Verbinden des ersten und zweiten Moduls die Module elektrisch und/oder pneumatisch miteinander verknüpft werden. Die entsprechenden Leitungen können beispielsweise entlang der Führungsschiene geführt werden, oder alternativ direkt von Modul zu Modul.

Gemäß einer Ausführungsform ist es bevorzugt, dass vor dem Verbinden der Module mit der Führungsschiene zu einem Grundkörper in zumindest einem der Module eine Bearbeitungsaggregat installiert wird. Somit wird das Modul bereits im einsatzbereiten Zustand in die Bearbeitungsvorrichtung eingebracht.

Gemäß einer weiteren Ausführungsform ist es vorgesehen, dass die Module vor dem Verbinden einzeln getestet werden. Somit kann die Funktionsfähigkeit der Module im Rahmen einer Vorinbetriebnahme überprüft werden. Auf diese Weise lassen sich mögliche Fehlerquellen schneller eingrenzen und entsprechend zügiger beheben. Ferner kann die Zeitschiene zur Endmontage verkürzt werden.

### Kurze Beschreibung der Zeichnungen

- Fig. 1: zeigt eine schematische Seitenansicht einer Bearbeitungsvorrichtung gemäß einer ersten Ausführungsform der vorliegenden Erfindung.

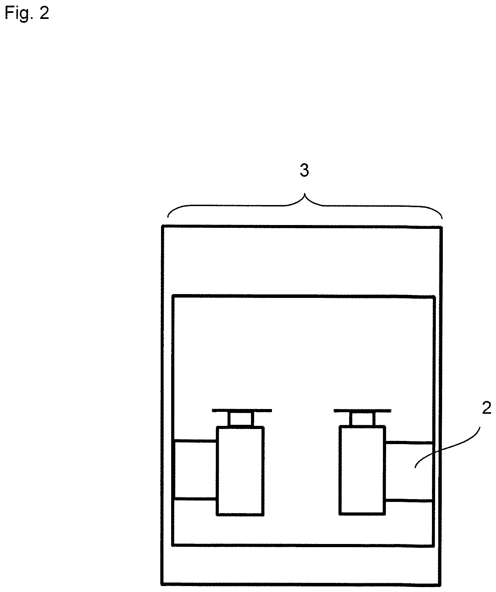

- Fig. 2: zeigt ein Modul der in Fig. 1 dargestellten Bearbeitungsvorrichtung, in einer seitlichen Richtung betrachtet.

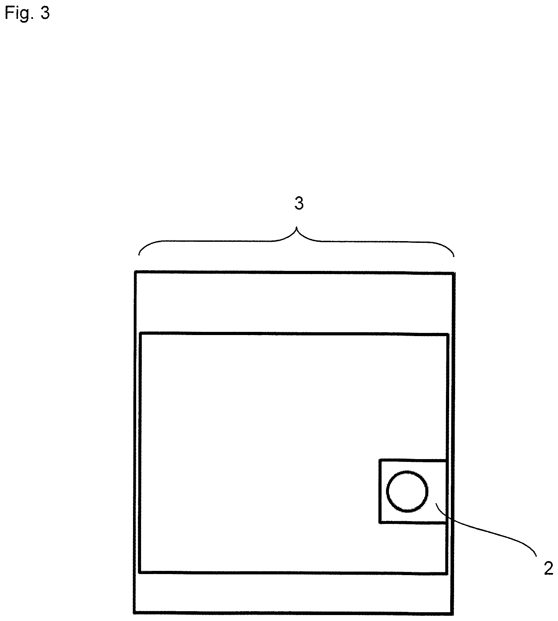

- Fig. 3: ist eine Draufsicht eines Grundaufbaus des in Fig. 2 gezeigten Moduls.
- Fig. 4: zeigt eine zweite Ausführungsform der Erfindung.

### Detaillierte Beschreibung einer bevorzugten Ausführungsform

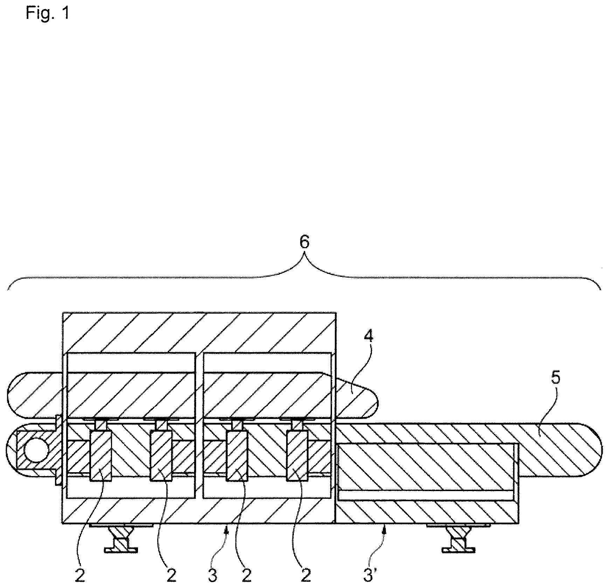

In Fig. 1 zeigt eine Bearbeitungsvorrichtung 6 in einer Seitenansicht, wobei die Bearbeitungsvorrichtung 6 als Durchlaufvorrichtung ausgebildet ist. Die in Fig. 1 dargestellte Bearbeitungsvorrichtung wurde aus den nachfolgend beschriebenen Elementen zusammengesetzt.

Die Bearbeitungsvorrichtung 6 umfasst ein erstes Modul 3 und ein zweites Modul 3', wobei die Module 3, 3' an einer Schnittstelle miteinander verbunden sind. Hierzu ist eine durchgängige Kettenführungsschiene 5 einer Fördereinrichtung vorgesehen. Ferner ist ein Oberdruck 4 vorgesehen.

Bei der Montage der Bearbeitungsvorrichtung 6 werden die Module ausgerichtet, zusammengefügt und anschließend mit der durchgehenden Kettenführungsschiene 5 der Fördereinrichtung und Oberdruck 4 zu einer Maschine zusammengefügt oder endmontiert werden.

Der Oberdruck 4 erstreckt sich zumindest abschnittsweise parallel zur Kettenführungsschiene 5 der Fördereinrichtung. Der Oberdruck 4 und die Kettenführungsschiene 5 der Fördereinrichtung sind derart angeordnet, dass zwischen diesen ein Werkstück im Durchlauf geklemmt werden kann, sodass mittels Bearbeitungsaggregaten 2 Bearbeitungsvorgänge an den im Durchlauf bewegten Werkstücken durchgeführt werden können.

Jedes Modul 3, 3' umfasst einen Körper, der bspw. aus einem metallischen Gussmaterial oder einem Betonmaterial erstellt wurde. Alternativ ist es möglich, den Körper der Module aus verschiedenen Elementen zusammenzusetzen, die miteinander verschweißt, verschraubt oder verklebt werden.

Das erste Modul 3 umfasst im vorliegenden Ausführungsbeispiel einen Boden, vertikale Streben, und ein Oberteil. Ferner ist das erste Modul 3 mit einer Fundamentstütze versehen.

Das zweite Modul 3' wird durch einen Boden und einen Träger ausgebildet. Das zweite Modul 3' umfasst ebenfalls eine Fundamentstütze.

Werden die Module 3, 3' mittels der Kettenführungsschiene der Fördereinrichtung 5 miteinander verbunden, so kann im Bereich deren Schnittstelle eine Fundamentstütze angeordnet sein.

Bei den Bearbeitungsaggregaten 2 kann es sich bspw. um Fräswerkzeuge handeln, die Bearbeitungsvorgänge an einer Schmalseite eines plattenförmigen Werkstücks durchführen. Die Bearbeitungsaggregate 2 sind an vorbereiteten Schnittstellen des Moduls 3 angebracht.

Ein Verfahren zum Montieren einer Bearbeitungsvorrichtung kann wie folgt durchgeführt werden.

Zunächst werden die Module 3, 3' hergestellt und vorbereitet. Handelt es sich bspw. um ein erstes Modul 3 aus einem Gussmaterial, so wird der Körper des Moduls 3 in einem Gießverfahren ausgebildet. Nachfolgend werden pneumatische und elektrische Leitungen und Anschlüsse im ersten Modul 3 vorgesehen und vorkonfektioniert. Entsprechendes geschieht mit weiteren Modulen. Die derart vorbereiten Module können zwischengelagert und im Falle eines konkreten Auftrags zum Bau einer Bearbeitungsvorrichtung verwendet werden.

Je nach Kundenwunsch werden dann in einem weiteren Verfahrensschritt Bearbeitungsaggregate 2 am Modul (hier Modul 3) vormontiert. Im vorliegenden Ausführungsbeispiel umfasst das erste Modul 3 acht Bearbeitungsaggregate, wobei lediglich vier dieser Bearbeitungsaggregate 2 in der Seitenansicht von Fig. 1 dargestellt sind.

Das erste Modul 3 und das zweite Modul 3' werden nachfolgend zusammen mit der spezifisch nach Kundenwunsch ausgebildeten Fördereinrichtung 5 und dem entsprechend angefertigten Oberdruck 4 zum Installationsort gebracht. Dort werden zunächst die Module 3, 3' ausgerichtet, zusammengefügt und anschließend mittels der Kettenführungsschiene verbunden und mittels des Oberdrucks zu einer Maschine verheiratet. Die Module 3, 3' werden zusätzlich miteinander verbunden, bspw. mittels einer Klemmverbindung oder einer kraftschlüssigen Verbindung.

Am Installationsort werden elektrische und/oder pneumatische Leitungen und Anschlüsse der Module 3, 3' miteinander verbunden. Ferner wird der Kettenförderer der Fördereinrichtung an der Kettenführungsschiene montiert. Entsprechend wird der Oberdruck 4 im vorliegenden Ausführungsbeispiel am ersten Modul 3 derart montiert, dass zwischen der Fördereinrichtung 5 und dem Oberdruck 4 ein Förderspalt ausgebildet wird.

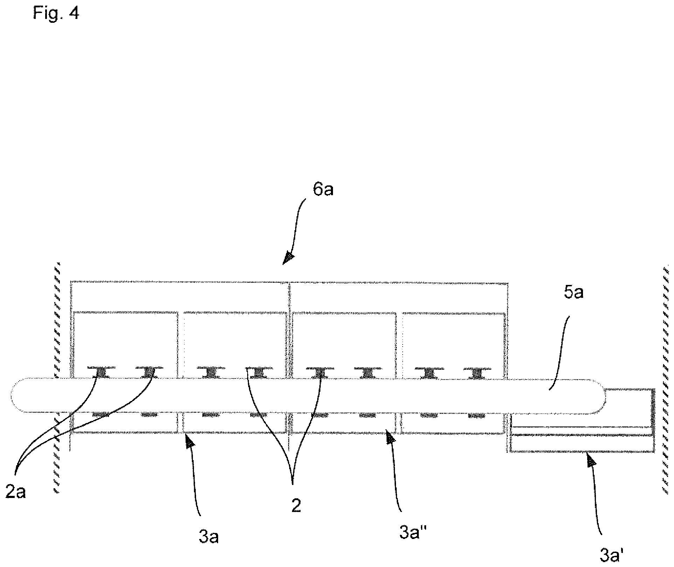

In Fig. 4 wird eine zweite Ausführungsform der Erfindung dargestellt. Die Bearbeitungsvorrichtung 6a gemäß der zweiten Ausführungsform umfasst ein erstes Modul 3a, ein zweites Modul 3a' sowie ein drittes Modul 3a", wobei das dritte Modul 3a" zwischen dem ersten Modul 3a und dem zweiten Modul 3a' eingefügt ist.

Ähnlich wie in der ersten Ausführungsform umfasst die Bearbeitungsvorrichtung 6a eine Fördereinrichtung mit einer Führungsschiene 5a. Die Führungsschiene 5a ist durchgängig vorgesehen, und erstreckt sich somit entlang des ersten Moduls 3a, des dritten Moduls 3a" sowie in Abschnitten des zweiten Moduls 3a'. Somit können die Module bei der Montage der Bearbeitungsvorrichtung 6a anhand der Führungsschiene 5a ausgerichtet und miteinander verbunden werden.

Das erste Modul 3a und das dritte Modul 3a" umfassen jeweils mehrere Bearbeitungsaggregate 2a. Dabei ist die Position der Bearbeitungsaggregate 2a beim ersten Modul 3a und beim dritten Modul 3a" ähnlich ausgebildet. Die Bearbeitungsaggregate selbst unterscheiden sich jedoch, sodass an einem im Durchlauf bewegten Werkstück unterschiedliche Bearbeitungsschritte anhand der Bearbeitungsaggregate 2a durchgeführt werden können.

## Patentansprüche

1. Bearbeitungsvorrichtung (6, 6a) zum Bearbeiten eines Werkstücks, insbesondere zum Bearbeiten eines plattenförmigen Werkstücks im Durchlauf, umfassend:
eine durchgängige Führungsschiene (5, 5a) für eine Fördereinrichtung, die als Kettenförderer ausgebildet ist,
ein erstes Modul (3, 3a) und ein zweites Modul (3'; 3a', 3a"), die mittels der durchgängigen Führungsschiene (5, 5a) miteinander verbunden sind, um einen Grundkörper auszubilden,
**dadurch gekennzeichnet, dass** die Module (3, 3') einen
Oberdruck (4) zum Niederhalten des Werkstücks aufnehmen, der sich zumindest abschnittweise benachbart zur Führungsschiene (5) erstreckt.

2. Bearbeitungsvorrichtung (6, 6a) gemäß Anspruch 1, **dadurch gekennzeichnet, dass** die Module (3, 3'; 3a, 3a', 3a") ferner kraftschlüssig miteinander verbunden sind, insbesondere mittels zumindest einer Schraub- oder Klemmverbindung.

3. Bearbeitungsvorrichtung (6, 6a) gemäß einem der vorangegangenen Ansprüche, **dadurch gekennzeichnet, dass** zumindest eines der Module (3, 3'; 3a, 3a', 3a") ein vormontiertes Bearbeitungsaggregat (2, 2a), insbesondere ein Fräsaggregat, aufweist.

4. Bearbeitungsvorrichtung (6, 6a) gemäß einem der vorangegangenen Ansprüche, **dadurch gekennzeichnet, dass** die Führungsschiene (5, 5a) eine Kettenführungsschiene ist.

5. Bearbeitungsvorrichtung (6, 6a) gemäß einem der vorangegangenen Ansprüche, **dadurch gekennzeichnet, dass** die Führungsschiene (5, 5a) mit einer Rasterung ausgebildet ist oder rasterartige Elemente umfasst.

6. Bearbeitungsvorrichtung (6a) gemäß einem der vorangegangenen Ansprüche, **dadurch gekennzeichnet, dass** die Module (3a, 3a") in Erstreckungsrichtung der Führungsschiene im Wesentlichen gleich dimensioniert sind.

7. Bearbeitungsvorrichtung (6a) gemäß einem der vorangegangenen Ansprüche, **dadurch gekennzeichnet, dass** die Module (3a, 3a") Montageplätze für Bearbeitungsaggregate (2, 2a) aufweisen,
wobei
die Anzahl, und bevorzugt die Position, der Montageplätze für Bearbeitungsaggregate (2, 2a) gleich ist, und/oder
die Montageplätze derart angeordnet sind, dass die Montageplätze zur Führungsschiene (5, 5a) gleich beabstandet sind.

8. Bearbeitungsvorrichtung (6a) gemäß einem der vorangegangenen Ansprüche, **dadurch gekennzeichnet, dass** die Bearbeitungsvorrichtung 3 oder mehr Module aufweist.

9. Verfahren zum Montieren einer Bearbeitungsvorrichtung (6, 6a) zum Bearbeiten eines Werkstücks, umfassend die Schritte:
Bereitstellen einer durchgängigen Führungsschiene (5, 5a) einer Fördereinrichtung, die als Kettenförderer ausgebildet ist, und
Verbinden eines ersten Moduls (3, 3a) und eines zweiten Moduls (3'; 3a', 3a") mittels der Führungsschiene (5, 5a), um einen Grundkörper der Bearbeitungsvorrichtung auszubilden,
wobei vor oder nach dem Montieren der Führungsschiene (5) ein Oberdruck (4) zum Niederhalten des Werkstücks am Grundkörper montiert wird, der sich zumindest abschnittweise benachbart zur Führungsschiene (5) erstreckt.

10. Verfahren gemäß Anspruch 9, **dadurch gekennzeichnet, dass** wobei sich der Oberdruck (4) zumindest abschnittsweise parallel zur Führungsschiene (5) erstreckt.

11. Verfahren gemäß einem der Ansprüche 9-10, **dadurch gekennzeichnet, dass** vor dem Verbinden des ersten und zweiten Moduls elektrische und/oder pneumatische Leitungen oder Anschlüsse im jeweiligen Modul vorinstalliert werden.

12. Verfahren gemäß einem der Ansprüche 9-11, **dadurch gekennzeichnet, dass** nach dem Verbinden des ersten und zweiten Moduls die Module elektrisch und/oder pneumatisch miteinander verknüpft werden.

13. Verfahren gemäß einem der Ansprüche 9-12, **dadurch gekennzeichnet, dass** vor dem Verbinden der Module zu einem Grundkörper in zumindest einem der Module ein Bearbeitungsaggregat (2) installiert wird.

14. Verfahren gemäß einem der Ansprüche 9-13, **dadurch gekennzeichnet, dass** die Module vor dem Verbinden einzeln getestet werden.

## Claims

1. Processing device (6, 6a) for processing a workpiece, in particular for processing a through-fed plate-shaped workpiece, comprising:
a continuous guide rail (5, 5a) for a conveyor device configured as a chain conveyor,
a first module (3, 3a) and a second module (3'; 3a', 3a"), which are connected to each other by means of the continuous guide rail (5, 5a), to form a base body,
**characterised in that** the modules (3, 3') accommodate a top pressure device (4) for holding down the workpiece, which top pressure device extends at least in portions adjacent to the guide rail (5).

2. Processing device (6, 6a) according to claim 1, **characterised in that** the modules (3, 3'; 3a, 3a', 3a") are further connected to one another in a force-fitting manner, in particular by means of at least one screw or clamp connection.

3. Processing device (6, 6a) according to any one of the preceding claims, **characterised in that** at least one of the modules (3, 3'; 3a, 3a', 3a") has a pre-assembled processing unit (2, 2a), in particular a milling unit.

4. Processing device (6, 6a) according to any one of the preceding claims, **characterised in that** the guide rail (5, 5a) is a chain guide rail.

5. Processing device (6, 6a) according to any one of the preceding claims, **characterised in that** the guide rail (5, 5a) is configured with a grid or comprises grid-like elements.

6. Processing device (6a) according to any one of the preceding claims, **characterised in that** the modules (3a, 3a") are substantially equally dimensioned in the direction of extent of the guide rail.

7. Processing device (6a) according to any one of the preceding claims, **characterised in that** the modules (3a, 3a") have mounting locations for processing units (2, 2a),
wherein
the number, and preferably the position, of the mounting locations for processing units (2, 2a) is the same, and/or the mounting locations are arranged in such a way that the mounting locations are equally spaced from the guide rail (5, 5a).

8. Processing device (6a) according to any one of the preceding claims, **characterised in that** the processing device comprises 3 or more modules.

9. Method for mounting a processing device (6, 6a) for processing a workpiece, comprising the steps of:
providing a continuous guide rail (5, 5a) of a conveyor device configured as a chain conveyor, and
connecting a first module (3, 3a) and a second module (3'; 3a', 3a") by means of the guide rail (5, 5a) to form a base body of the processing device, wherein before or after mounting of the guide rail (5), a top pressure device (4) for holding down the workpiece is mounted on the base body, which top pressure device extends at least in portions adjacent to the guide rail (5).

10. Method according to claim 9, **characterised in that** wherein the top pressure device (4) extends at least in portions parallel to the guide rail (5).

11. Method according to any one of claims 9-10, **characterised in that**, prior to connecting the first and second modules, electrical and/or pneumatic lines or connections are pre-installed in the respective module.

12. Method according to any one of claims 9-11, **characterised in that** after connection of the first and second modules, the modules are electrically and/or pneumatically linked to each other.

13. Method according to any one of claims 9-12, **characterised in that** before connection of the modules to form a base body, a processing unit (2) is installed in at least one of the modules.

14. Method according to any one of claims 9-13, **characterised in that** the modules are tested individually before connection.

## Revendications

1. Dispositif d'usinage (6, 6a) pour l'usinage d'une pièce à usiner, en particulier pour l'usinage d'une pièce à usiner en forme de plaque en continu, comprenant :
un rail de guidage (5, 5a) continu pour un dispositif de transport qui est réalisé comme transporteur à chaîne,
un premier module (3, 3a) et un second module (3' ; 3a', 3a") qui sont reliés l'un à l'autre au moyen du rail de guidage (5, 5a) continu afin de réaliser un corps de base,
**caractérisé en ce que** les modules (3, 3') reçoivent une pression du cylindre supérieur (4) pour la retenue de la pièce à usiner qui s'étend au moins par sections de manière contiguë au rail de guidage (5).

2. Dispositif d'usinage (6, 6a) selon la revendication 1, **caractérisé en ce que** les modules (3, 3' ; 3a, 3a', 3a") sont de plus reliés les uns aux autres à force, en particulier au moyen d'au moins une liaison vissée ou serrée.

3. Dispositif d'usinage (6, 6a) selon l'une quelconque des revendications précédentes, **caractérisé en ce qu'**au moins un des modules (3, 3' ; 3a, 3a', 3a") présente un groupe d'usinage (2, 2a) prémonté, en particulier un groupe de fraisage.

4. Dispositif d'usinage (6, 6a) selon l'une quelconque des revendications précédentes, **caractérisé en ce que** le rail de guidage (5, 5a) est un rail de guidage à chaîne.

5. Dispositif d'usinage (6, 6a) selon l'une quelconque des revendications précédentes, **caractérisé en ce que** le rail de guidage (5, 5a) est réalisé avec un tramage ou comporte des éléments de type trame.

6. Dispositif d'usinage (6a) selon l'une quelconque des revendications précédentes, **caractérisé en ce que** les modules (3a, 3a") sont dimensionnés sensiblement de manière identique dans le sens d'étendue du rail de guidage.

7. Dispositif d'usinage (6a) selon l'une quelconque des revendications précédentes, **caractérisé en ce que** les modules (3a, 3a") présentent des places de montage pour des groupes d'usinage (2, 2a),
dans lequel
le nombre, et de préférence la position, des places de montage pour des groupes d'usinage (2, 2a) est identique, et/ou les places de montage sont agencées de telle manière que les places de montage soient espacées de manière identique du rail de guidage (5, 5a).

8. Dispositif d'usinage (6a) selon l'une quelconque des revendications précédentes, **caractérisé en ce que** le dispositif d'usinage présente 3 modules ou plus.

9. Procédé de montage d'un dispositif d'usinage (6, 6a) pour l'usinage d'une pièce à usiner, comprenant les étapes consistant à :
fournir un rail de guidage (5, 5a) continu d'un dispositif de transport qui est réalisé comme transporteur à chaîne, et
relier un premier module (3, 3a) et un second module (3' ; 3a', 3a") au moyen du rail de guidage (5, 5a) afin de réaliser un corps de base du dispositif d'usinage, dans lequel avant ou après le montage du rail de guidage (5), une pression du cylindre supérieur (4) est montée pour la retenue de la pièce à usiner au niveau du corps de base, laquelle s'étend au moins par sections de manière contiguë au rail de guidage (5).

10. Procédé selon la revendication 9, **caractérisé en ce que** la pression du cylindre supérieur (4) s'étend au moins par sections parallèlement au rail de guidage (5).

11. Procédé selon l'une quelconque des revendications 9 à 10, **caractérisé en ce qu'**avant la liaison du premier et du second module des conduites ou raccords électriques et/ou pneumatiques sont préinstallés dans le module respectif.

12. Procédé selon l'une quelconque des revendications 9 à 11, **caractérisé en ce qu'**après la liaison du premier et du second module, les modules sont reliés l'un à l'autre électriquement et/ou pneumatiquement.

13. Procédé selon l'une quelconque des revendications 9 à 12, **caractérisé en ce qu'**avant la liaison des modules en un corps de base, un groupe d'usinage (2) est installé dans au moins un des modules.

14. Procédé selon l'une quelconque des revendications 9 à 13, **caractérisé en ce que** les modules sont testés individuellement avant la liaison.
